# EUROPEAN PATENT SPECIFICATION

(11) **EP 0 245 367 B1**
(45) Date of publication and mention of the grant of the patent: **15.12.1993**
(21) Application number: 86906680.3
(22) Date of filing: 22.10.1986
(51) Int. Cl.: A47B 81/06

(54) **COMPACT DISK CONTAINER STORAGE DEVICE**
KOMPAKTPLATTENBEHÄLTERANORDNUNG
DISPOSITIF POUR STOCKER DES BOITIERS DE DISQUES COMPACTS

(30) Priority: 04.11.1985 US 795072
(43) Date of publication of application: 19.11.1987
(73) Proprietor: CREATIVE POINT INC., Fremont, CA 94539 (US); PALMER, Peter J., Fremont, CA 94539 (US); Long, Jerry M., Freemont, CA 94539 (US)
(72) Inventor: CREATIVE POINT INC., Fremont, CA 94539 (US); PALMER, Peter J., Fremont, CA 94539 (US); Long, Jerry M., Freemont, CA 94539 (US)
(74) Representative: Enskat, Michael Antony Frank
(86) International application number: US8602273
(87) International publication number: WO8702558

(56) References cited:
- WO-A-85/01608
- DE-A- 3 246 041
- GB-A- 2 021 072
- US-A- 3 969 007
- US-A- 4 087 138
- US-A- 4 121 877
- US-A- 4 162 112
- US-A- 4 265 369
- US-A- 4 270 817
- US-A- 4 330 162

## Description

### TECHNICAL FIELD

The present invention relates generally to devices for storing discrete objects and more particularly to devices adapted for ready access storage of rectangular solid objects. The primary present usage of the Compact Disk Container Storage Device of the preferred embodiment of the present invention is for space efficient and quick-access storage of the jewel boxes conventionally sold as containers enclosing a digital audio compact disk, an optical disk used in sound reproduction.

### BACKGROUND ART

Numerous components are sold to the public in rectangular solid containers which are adapted for contined use during the life of the product, and not merely as throw-away items. A prime example of this type of container is the plastic flip-open box in which typical magnetic tape cassettes (video or audio) are packaged. A more recent entry into the field is the "jewel" box utilized to enclose digital audio compact disks, the new standard for audio quality in sound reproduction. In each of these cases the actual product is contained within the box but is of such delicate nature that it is appropriate to retain the packaging container for use to protect the actual product throughout its lifetime. Furthermore, the container provides a convenient location for labelling and identifying data relating to the contents.

There is substantial demand for storage devices for enclosing and protecting quantities of containers such as the cassette boxes and the jewel boxes. The marketplace is filled with a wide variety of commerically utilized storage devices adapted for just this type of item. These storage devices range from extremely simple slotted boxes, either covered or uncovered, to sophisticated devices having mechanisms for ejecting specified boxes therefrom. The storage devices utilized in the prior art cover the entire spectrum of pricing and durability and are constructed of a wide variety of materials.

However, none of the prior art devices available to the public has adequately met all of the goals of: simplicity of design; visual aesthetics; ready accessability of contents; reliable operations mechanisms; visual accessability of label information; and resonable density of storage. Improvements in each of these areas is particularly desirable in the industry. Furthermore, it is of extreme value to provide a device which combines all of the desirable characteristics set forth above.

US-A-4087138 discloses a storage device having a plurality of slots for receiving objects and securing/release means associated with each slot to secure an object therein and, upon manipulation, to release and eject the object therefrom.

### DISCLOSURE OF INVENTION

It is an object of the present invention to provide a storage device for rectangular solid objects which combines secure storage, ready access to contents and visual accessability of the contents.

It is another object of the present invention to provide a storage device wherein the jewel boxes utilized for storing compact disks may be stored in a secure but convenient manner.

It is a further object of the present invention to provide an apparatus for partially ejecting a selected object from the storage device by use of a straightforward and simple mechanism.

It is yet another object of the present invention to provide a storage device which displays a plurality of objects in a visually aesthetically pleasing manner, with each of the objects being readily visually indentifiable from the exterior of the device.

According to the present invention, there is provided a storage device for storing a plurality of discrete objects, comprising a hollow exterior frame member, an interior frame member dividing the interior of the device into a plurality of slots for receiving the objects, each of said slots being accessible from an open side; and securing/release means associated with each of said slots to secure one of the objects therein and, upon manipulation, to release and eject the object therefrom such that the ejected object is manually accessible from the exterior of the device, wherein the exterior frame member has one open side and that the securing/release means comprises; a lever portion free to rotate in one dimension about a fulcrum/pivot, said fulcrum/pivot being fixed with respect to the compartment and being situated between the front part and rear part of said lever; a securing surface portion attached to the end of the lever corresponding to the front of the compartment, the securing surface being adapted to overlap a portion of the front surface of the object when the object is installed in the compartment; urging means to continually urge the securing surface portion to a position of maximal overlap of the object; and release means accessible to a user, being adapted such that pressure upon the release means overcomes the urging force of the urging means and causes the lever portion to rotate about said fulcrum/pivot to a position wherein the securing surface does not overlap the front of the object; characterised in that a triangular wedge portion is attached to the end of the lever portion corresponding to the rear of the compartment and is adapted to abut against a rear corner of the object when the object is installed within the compartment, such that pressure upon the release means forces the wedge portion against the rear corner of the object so as to partially forcibly eject the object from the compartment.

The preferred embodiment includes an exterior frame in the shape of a hollow rectangular solid, being open to the front, an interior frame member received therein, and a door to enclose the entire volume when desired. The interior frame includes, in the preferred embodiment, three columns of storage slots, each column including eight slots. Each slot provides registration ledges for positioning the jewel box within the slot and a securing/releasing mechanism for restraining the jewel box from sliding out of the slot. The restraining portion of the mechanism is releasable by manual pressure with the act of releasing the securing element also acting to partially eject the box from the slot. The degree of ejection is only partial so that the box will not fall, but will still be supported within the slot on the ledges. However, the ejection is of sufficient degree so that the ejected jewel box is readily manually accessable to the user. The device is adapted to provide ready accessability to each of the compact disk boxes stored therein while retaining them in a dust free environment. The door is preferrably selected to be transparent or partially transparent such that the labelling information appearing on the edge of the boxes is readily visible from the exterior of the device. The device is particularly well adapted for use with home stereo equipment as its shape and size are compatible with standard storage and display components. Alternate embodiments are extremely desirable for portability, such as for use with automobile sound reproduction equipment.

An advantage of the present invention is that the entire interior volume of the storage device is substantially sealable such that the contents are protected from dust and accidental ejection.

Another advantage of the present invention is that a single, simple mechanism is utilized both to secure the object within the storage slot and also to eject the object therefrom when desired.

A further advantage of the invention is that it retains maximum visual accessibility to the labelling information contained on the end of the compact disk box or other stored object.

A still further advantage of the present invention is that an entire column of securing/ejection mechanisms may be integrally contructed, thus substantially reducing manufacture and assembly costs.

Yet another advantage of the present invention is that the securing/release mechanism is adaptable for use in a wide variety of applications, with substantial variation being possible in the size, relative dimensions and number of objects to be stored.

A still further advantage of the invention is that the elasticity and stored energy characteristics of the securing/release mechanism assembly cause the desired jewel box to be ejected to a position where it is easily handled by the user.

These and other objects and advantages of the present invention will become clear to those skilled in the art in view of the description of the best presently known mode of carrying out the invention and the industrial applicability of the preferred embodiment, as described herein and as illustrated in the several figures of the drawing.

### BRIEF DESCRIPTION OF THE DRAWING

Fig. 1 is a perspective view of a rectangular solid object storage device according to the preferred embodiment of the present invention;
Fig. 2 is a front elevational view of the device of Fig. 1, shown with the door element removed;
Fig. 3 is a cross-section taken along line 3-3 of Fig. 2;
Fig. 4 is perspective view of a complete securing/release mechanism assembly unit adapted for use in eight adjacent vertical storage slots; and
Fig. 5 is a cross-section of the securing/ejecting lever component of the securing/release mechanism assembly.

### BEST MODE OF CARRYING OUT INVENTION

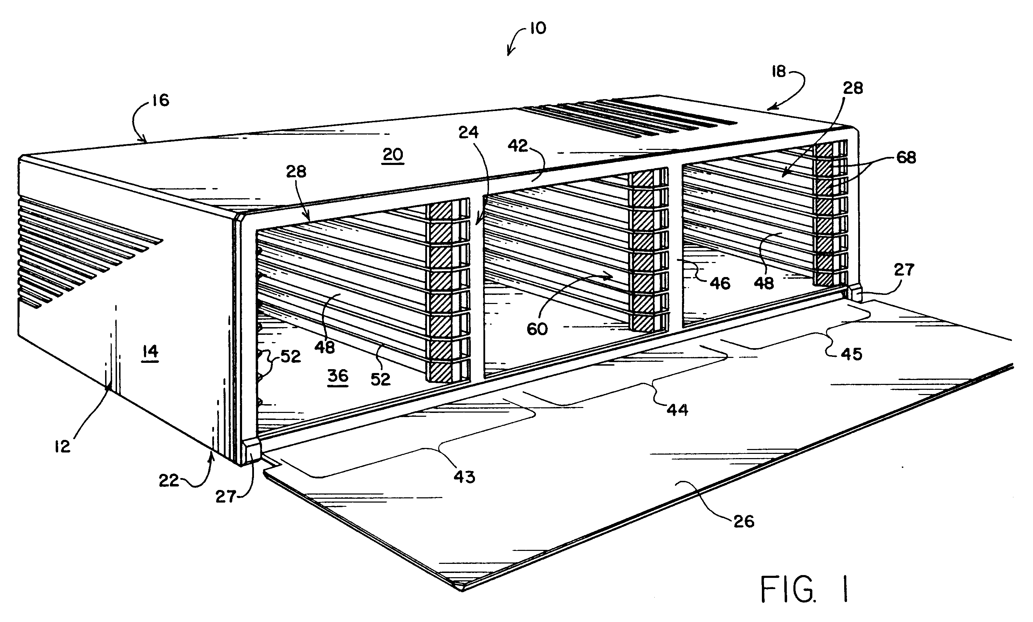

The presently preferred embodiment of present invention is that specific version of the overall rectangular solid object storage device which is particularly adapted for enclosing containers or "jewel" boxes utilized for packaging and sale of audio compact disks. The compact disk container storage device is illustrated in a perspective view in Fig. 1 and is designated by the general reference character **10**.

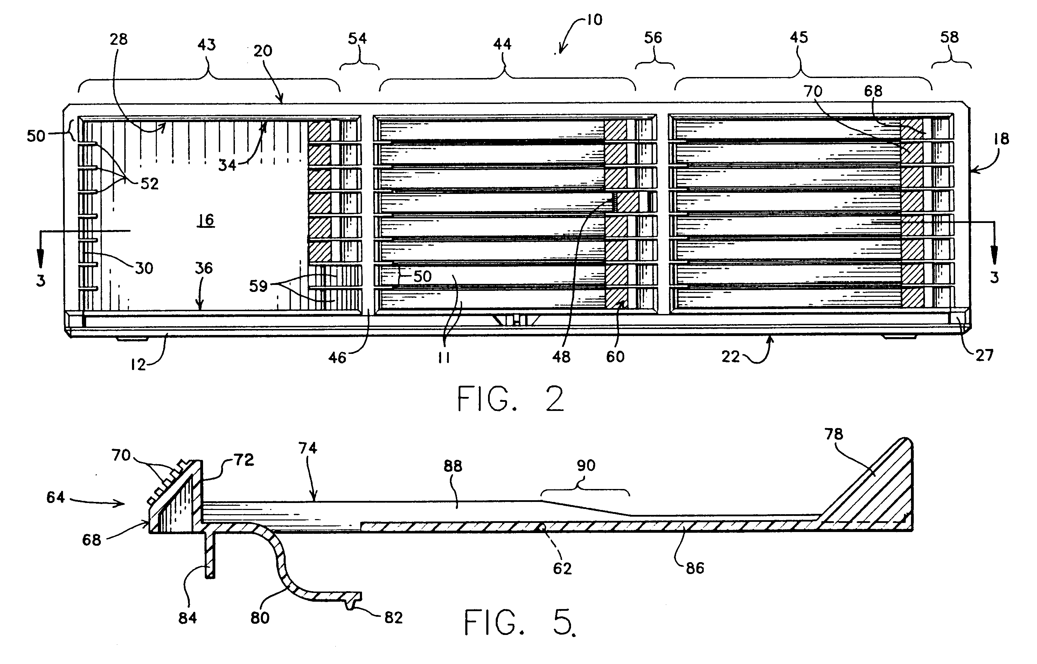

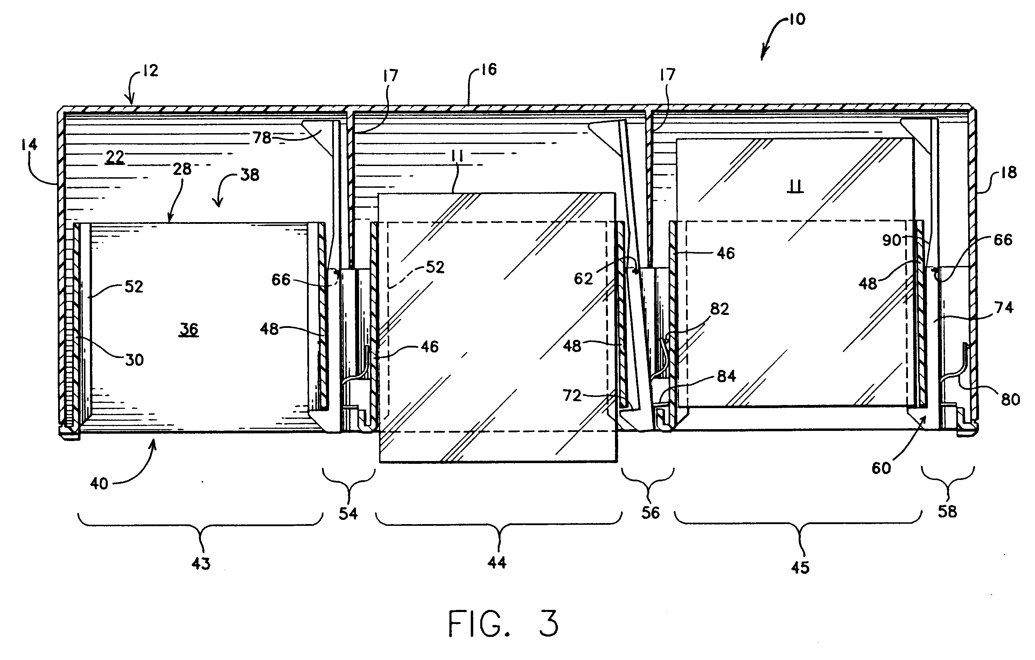

The storage device **10** illustrated in Fig. 1 is the particular embodiment adapted to contain twenty four jewel boxes **11** in distinct slots. The jewel boxes **11** (shown in Fig. 2 and 3), when the storage device **10** is fully loaded, are arrayed in three columns, each of the columns having slots adapted to receive eight of the boxes **11**. As shown in Fig. 3, a jewel box **11** is completely installed within the fifth slot from the top on the right column and is partially installed in the fifth slot from the top in the center column.

The storage device **10** is constructed utilizing an exterior frame member **12** to enclose a rectangular solid shaped volume. The exterior frame member **12** includes a left side wall **14**, a rear wall **16** including a pair of inwardly protruding structural central ribs **17**, a right side wall **18**, a top wall **20** and a bottom wall **22**. the remaining side of the exterior frame member **12** is open to provide a front aperture **22**. The front aperture **22** is adaptable for being closed by a door **26**. When the door **26** is in a closed position, the entire internal volume of the exterior frame member **14** in enclosed in a substantially dust free manner.

The door **26** is attached via a pair of hinges **27** to an interior frame member **28** is adapted for slidably fitting within the exterior frame member **12**. The interior frame **28** includes a left side wall **30**, a right side wall **32**, a top wall **34**, and a bottom wall **36**. The interior frame **28** is not enclosed fore and aft, but includes a rear opening **38** and front opening **40** created by the rear and front edges of the walls **30**, **32**, **34**, and **36** respectively. The front opening **40** is framed by a front ridge **42** which extends outward so as to abut smoothly against the front edges of the walls **14**, **18**, **20**, and **22** of the exterior frame member **12**. The interior frame **28** is divided into three distinct storage column compartments, these being a left compartment **43**, a center compartment **44** and a right compartment **45**. The means of separation include a left divider wall **46** and a right divider wall **48** for each of the storage column compartments **43**, **44** and **45**. In the case of the left compartment **43**, the function of the left divider wall **46** is performed by the left interior side wall **30**. However, in the center and right compartments **44** and **45** the left divider wall **46** and the right divider wall **48** are separate components.

Each of the compartments **43**, **44** and **45** is divided into a plurality, in the preferred embodiment, eight, of slots **50** for receiving the jewel boxes **11**. The vertical definition of slots **46** is determined by slot ledges **52** formed on the sides of the left divider walls **46** and the right divider walls **48** facing into the storage column compartments **43**, **44** and **45**. In the preferred embodiment **10**, each of the interior facing walls is provided with seven slot ledges **52**, each having a respective opposing slot ledge **52** on the opposite wall of the same compartment.

To the right of each of the storage column compartments **43**, **44** and **45** are as series of mechanism tubes. A left mechanism tube column **54** corresponds to left compartment **43**, a center mechanism tube column **56** corresponds to the center compartment **44** and a right mechanism tube column **58** corresponds to the right compartment **45**. Each of the mechanism tube columns **54**, **56** and **58**, in the preferred embodiment **10**, includes eight rectangular tubes **59** bounded to the right by the left divider wall **48** for the corresponding compartment and to the right by left divider wall **46** (except in the case of the right mechanism tube column **58** in which case the right boundary is the right side exterior wall **18**.) The upper and lower boundaries of the rectangular tubes **59** are provided by the slot ledges **52** which extend throughout except for the uppermost and lowermost rectangular tubes **59** which are bounded respectively by the top interior wall **34** and the bottom interior wall **56**. Since each of the rectangular tubes **59** is a portion of the interior frame member **28** they are open both to the front and to the rear.

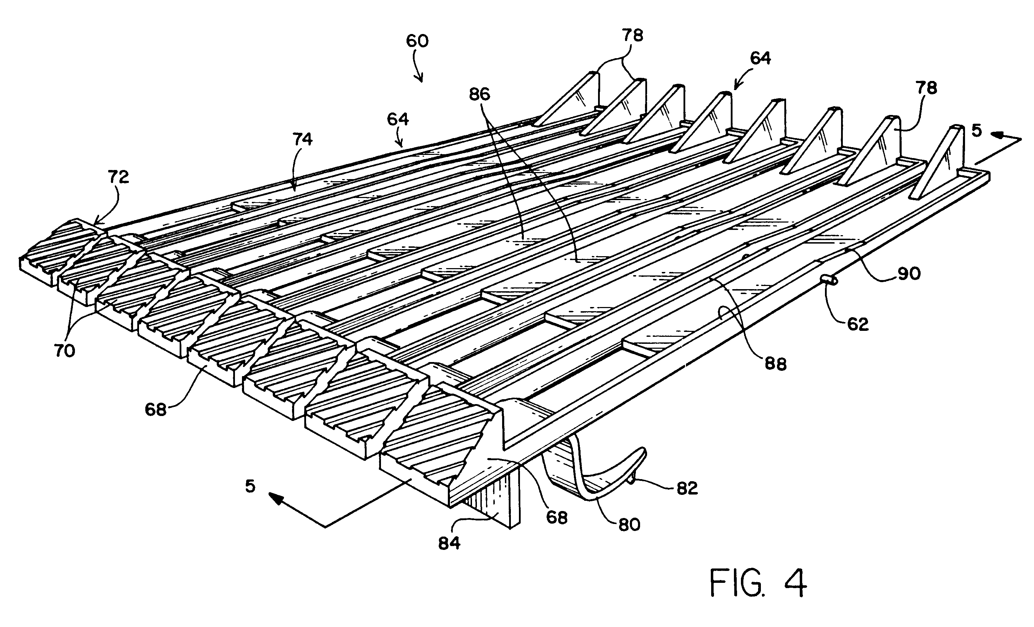

In the assembled storage device **10** each of the mechanism tube columns **54**, **56** and **58** will contain a release mechanism assembly **60**. The release mechanism **60** is shown in a perspective view in Fig. 4. In this illustration it may be seen that the securing/release assembly **60** includes a torsion post **62** which extends vertically from top to bottom of the assembly **60** and a series of individual lever elements **64**. For the securing/release mechanism assembly **60** adapted for insertion into the preferred embodiment of the storage device **10** there are eight lever elements **64** for each assembly **60**. The preferred embodiment of the mechanism assembly **60** is an integrally formed unitary element with the torsion post **62** providing the connecting component and the fulcrum/pivot about which the lever elements **64** rotate. In this manner, each of the lever elements **64** is physically connected to each of the other lever elements in such a manner that torque applied to one will be partially transmitted throughout the assembly **60**.

The mechanism assembly **60** is installed in each of the mechanism tube columns **54**, **56**, and **58** by inserting the mechanism assembly **60** from the rear of each of the mechanism tube columns **54**, **56** or **58**. One lever element **64** will fit into each of the rectangular tubes **59**. A semicircular post detent **66** is formed in the slot ledge **52** at the center of the rear of each of the rectangular tubes **59**. The post detent **66** is adapted for receiving the torsion post **62** when the mechanism assembly **60** is installed to its proper position. The detent secures the fulcrum of the mechanism **60** such thatit is stationary with respect to the slot **50**. The interaction of the torsion post **62** with the post detent **66** prevents the mechanism assembly **60** from sliding forward within the mechanism tube columns more than is desired. Slippage to the rear is prevented by a variety of factors which will be discussed in more detail as follows.

As is best shown in the cross-sectional views of Figs. 3 and 5, the lever elements **64** of the securing/release mechanism assembly **60** include a large number of integral components formed therein. The forwardmost portion of the element **64** is a release button **68** which may include a series of friction ridges **70** formed on the surface thereof make it more easily manipulable by the user's finger. The rear portion of the release button **68** provides a securing surface **72** for overlapping and abutting against the front edge of the jewel box **11** when the jewel box **11** is contained within the slot **50** (see column **45** in Fig. 3). The securing surface **72** also abuts against the front edge of the right divider wall **48** to prevent the mechanism assembly **60** from sliding rearward.

The release button **68** is situated at the front end of a lever arm **74**. The rear end of the lever arm **74** terminates in a wedge member **76** which is adapted to abut against the rear right corner of the jewel box during the installed mode of the device **10**. The wedge **76** also applies ejection force to the jewel box **11** when desirable.

Slightly rearward of the release button **68**, the lever arm **74** is provided with a return spring arm **80** which extends outward therefrom in a curved manner. The return spring arm **80** is of the expansion type, resilient and has a shape such that it abuts against the interior of the left divider wall **46** (or in the case of the right mechanism tube column **58**, the right side exterior wall **18**) and operates to urge the lever arm **74** and thus the entire lever element **64** to the left so as to have the securing surface **72** maximally overlap the front edge of the right divider wall **48** and the maximum portion of the front surface of the jewel box **11**. A small protrusion **82** is provided on the portion of the return spring arm **80** which abuts against the left divider wall **46**. The protrusion **82** provides a contact point with the left divider wall **46** and may be adjusted in size during the molding process in order to achieve desired degree of tension created by the spring arm **80** on the lever element **64**.

Slightly forward at the point of which the return spring arm **80** intersects the lever arm **74** is provided a stop post **84**. The stop post **84** is a rigid element having a length such that when the return spring arm **80** has been compressed to the desired degree, the stock post **84** will contact the right divider wall and prevent additional compression.

The lever arm **74** includes a vertical lever arm wall element **86**, and pair of a horizontal strengthening beams **88**, provided to increase the rigidity and durability of the lever arm **74**. A portion of each strengthening beam **88** is removed near the rear portion of the lever arm **74** to provide clearance angling **90**. In the preferred embodiment **10** the clearance angling **90** is a six degree slope towards the lever arm wall **86** in order to allow the strengthening beams **88** to avoid contact with the rear portion of the right divider wall **48** when the release button **68** is forced rightward and the return spring arm **80** is compressed.

The preferred embodiment **10** includes only four separate molded elements. These are the exterior frame member **12**, the interior frame member **28**, the door **26** and the securing/release mechanism assembly **60**. Of course, in the embodiment **10** shown, three separate mechanism assemblies are combined within the single storage device **10**. The elements are adapted to frictionally fit and physically snap within each other such that no special connecting hardware is required, with the exception that it is desirable to use hinging hardware **27** to attach the door **26**.

For aesthetic purposes, as well as for functionally matching the shape of the jewel boxes **11** or other objects to be contained therein, the overall shape of the device is a rectangular solid. The dimensions are dependent upon the precise contents involved, but for use with standard compact disk jewel boxes **11**, the embodiment **10** has an overall width of 46.83 cm, (18.66 in.), a height of 12.02 cm (4.79 in.) and a depth of 16.94 cm (6.75 in.). Each of the storage column compartments **43**, **44** and **45** has a width of 12.37 cm (4.93 in.) and a total height of 10.09 cm (4.02 in.). Each of the slots **50** has a height of 1.13 cm (0.45 in.) while the slot ledges **52** extend a distance of 0.63 cm (0.25 in.) into the storage compartments **43**, **44** and **45** while having a thickness of 0.15 cm (0.06 in.). The interior divider walls **46** and **48** extend a distance of 10.87 cm (4.33 in.) from front to back. The mechanism tube columns **54**, **56** and **58** have a width of 2.47 cm (0.985 in.) and are otherwise of the same dimensions as the storage column compartments **43**, **44** and **45**.

The vertical dimensions of the securing/release mechanism assembly **60** are adapted to fit within the mechanism tube columns **54**, **56** and **58** with the portions of the torsion post **62** between adjacent lever elements **64** having a length of 0.20 cm (0.080 in.) The release button **68** has a total width of 2.38 cm (0.950 in.) and the slanted portion thereof including the friction ridges **70**, represents a width of 1.51 cm (0.600 in.). The lever arm **74**, between the rear of the release button **68** and the front of the wedge **76**, has a length of 13.18 cm (5.25 in.). The wedge **76** is in the form of a right triangle having a base of 1.76 cm (0.700 in.) and a side (coextensive with the lever arm **74** of )2.48 cm (0.989 in.). The stop post **84** has a length of 0.879 cm (0.350 in.) and the return spring arm **80** extends outward a distance of 1.51 cm (0.600 in.) and rearward a distance of 1.88 cm (0.750 in.) from its point of attachment to the lever arm **74**. The vertical thickness of the lever arm wall **86**, and all other vertical components of the lever element **64** is 1.08 cm (0.430 in.).

Of course, the precise dimensions of all of these elements are not critical to the operation of the storage device **10** but are selected merely to maximize efficiency. In particular, if the object to be stored within the storage device **10** in something other than a jewel box **11**, the dimensions of all of the components will be modified accordingly.

Although the invention has been described particularly in terms of a storage device **10** adapted for containing jewel boxes **11** it is readily adaptable for any other rectangular solid object. Indeed, a complete rectangular solid is not required for the operation of device **10**. As long as the right front and right rear portions of the object to be stored conform to abutment against the securing surface **72** and the wedge **76**, nearly any shape of object may be adequately stored within the device **10**. For proper operation, it is necessary that the stored object be at least semirigid.

The number of objects to be stored within the device **10** is also entirely a matter of choice. It is envisioned that, in addition to the preferred embodiment **10**, alternate embodiments of the same device will be constructed, with one such emodiment including two, rather than three, storage column compartments and another having only a single storage column compartment. Furthermore, the number of slots within each storage column compartment may be modified as desired. It is presently envisioned that other embodiments utilizing only six slots per compartment will be constructed. None of these alternate embodiments significantly alter the nature or operation of the invention.

Although the selection of materials for the construction of the device **10** is largly a matter of choice, the preferred material for the exterior frame member **12** and the interior frame member styrene. Other materials of the rigid plastic family are also quite adequate. Although cost considerations make them unlikely choices, metal or wood designing are feasible as well, rigidity and strength being the primary considerations. Typically, the frame members are selected to be opaque, although transparency or translucency will not in any way alter their effectiveness. Color is entirely a matter of individual choice.

The door **26** is ordinarily selected to be a transparent or nearly transparent material which provides visual access to the contents of the device **10** when the door **26** is closed. In the preferred embodiment the door **26** is contructed of ABS or styrene. Although glass or various other materials may be substituted without altering the nature of the invention. It may also be aesthetically desirable to utilize an opaque door.

The securing/release mechanism assembly **60** is an integral molded plastic element in the preferred embodiment **10**. The integral construction is important to the effective operation since the torsion post **62** operates to cause all of the lever elements **64** to be torsionally dependent on each of the others. This prevents a individual lever element **64** from slipping or otherwise operating totally independently of the others within the same mechanism assembly **60**. One result of this interaction is that the mechanism assemblies **60** can only be disassembled by simultaneously releasing all of the release buttons **78** on the associated lever arms **74** at once in order to slide the assembly **60** rearward through the rectangular tubes **59**. Accidental disassembly is thus less effectively eliminated. Of course, although the integral construction of the mechanism assembly **60** has been found to be the optimal way to achieving the desired results, there are other methods of constructing the assembly **60** to achieve the same goals. One such method is to torsionally connect the lever element **64** together in some other manner, such as by a rubber band placed about each of the lever arm **74** from top to bottom in the column. Similarly, a common vertical post about which each of the lever elements pivot, rather than a torsion post, may also be provided. In the preferred embodiment **10**, the preferred material for the mechanism assembly **60** is polypropylene or K-resin and the thicknesses of the torsion posts **62** are selected such that a rotation of six degrees is permitted with maximum material memory and resiliency and with minimal degredation of the torsion post material upon repeated use. For aesthetic purposes it may be desirable to cause the mechanism assembly **60** to have a different color appearance from that of the exterior frame **12** and the interior frame **28**.

Those skilled in the art will readily observe that numerous other modifications and alterations may be made without departing from the spirit and scope of the invention as defined in the appended claims.

### INDUSTRIAL APPLICABILITY

The present invention is adapted to be utilized for storage of solid objects, especially solid objects in the shape of rectangular solids and most specifically the preferred embodiment **10** is designed for use with the jewel boxes **11** in which audio compact disks are sold. The invention is adapted for storing a plurality of the jewel boxes **11** in a compact, readily accessable manner and in an aesthetically pleasing array. Reference is made to the figures of the drawing to aid in understanding the manner in which the storage device **10** operates to effectively store, secure and, when desired, release the jewel boxes **11** which are stored therein.

Initially, user will observe a totally enclosed volume with the door **26** closed. The door is hingedly opened to provide access to the entire front aperature **24** of the device **10**. Of course the user will be able to visually observe the contents of the device **10** even with the door closed, due to the transparency of the door **26**. However, once opened, the user has the option of installing an additional jewel box **11** within an unoccupied slot **50** or ejecting a previously installed jewel box **11**, as desired. The corss-sectional illustration of Fig. 3 shows individual slots **50** in all three possible modes. The slot **50** in the left storage column compartment **43** is shown as empty, that of the right storage column compartment **45** has a jewel box **11** fully installed therein, and the slot in the center storage column compartment **44** illustrates a slot **50** having the jewel box **11** in the fully ejected position. In the case of the empty slot it is seen that the force of the return spring arm **80** causes the securing surface **72** to extend completely beyond the front edge of the right divider wall **48** until the strengthening beams **88** abut against the right divider wall **48**.

In the event that the user wishes to store a jewel box **11** within this empty slot **50** in the left storage column compartment **43**, the user will simply vertically and horizontally align the jewel box **11** so that it fits between the slot ledges **52** and push rearward. The angled front of the release button **68** would cause the release button **68** to be pushed rightward by the rearward force on the jewel box **11** until the distance between the left edge of the release button **68** and the opposing right divider wall **48** is sufficient to permit the jewel box **11** to pass there between. The jewel box **11** is then continually forced rearward until its front right corner passes the release button **68** and the rear right corner engages the wedge **76**. An audible snap will then occur as the force of the return spring arm **80**, combined with the force of the jewel box **11** upon the wedge **76**, will then cause the lever element **64** to rotate about the fulcrum/pivot formed by the torsion post **62** such that the securing surface **72** will be forced left to overlap the front portion of the jewel box **11**. At this point the jewel box **11** will be installed, such as shown in the right storage column compartment **45**.

When the jewel box **11** has been installed it may be seen that the overlap of the securing surface **72** with the front right portion of the jewel box **11** prevents the jewel box **11** from sliding forward or otherwise moving within the slot **50**. This is a secure installation, with the dimensions properly selected, such that the jewel box **11** is prevented from motion within the slot and no vibrational damage is likely to occur to the contents during usage.

When it is desired to eject a jewel box **11** from its slot **50**, then the user applies rightward pressure to the release button **68**. Slippage in applying this pressure is minimized by the presence of the friction ridges **70**. The rightward pressure on the release button acts to compress the return spring arm **80**, remove the abutment of the securing surface **72** from the front edge of the jewel box **11** so as to allow release and also to force the wedge **76** to apply positive pressure against the rear right corner of the jewel box **11**. As the release button **68** is slid rightward the lever arm **74** flexes with increased torsion force since the abutment of the securing surface against the jewel box **11** prevents release. The wedge **76** cannot slide until the jewel box **11** is free to move. The release is a sudden event and the lever arm **74** and wedge **78** snap in such a manner as to rapidly urge the jewel box **11** forward out of the slot **50**. The degree of the releasing force provided to the jewel box **11** is limited by the stop post **84** and by sliding friction such that the jewel box **11** is typically only forced forward to the position shown in the center storage compartment **44**. This will be somewhat dependent upon the materials and thicknesses of the lever element **64** but represents the desired goal to which other factors are adjusted. In this position the jewel box **11** is still supported on the slot ledges **52** and will not fall out of the device. Instead, the jewel box **11** has a sufficient exposed surface that the user may grasp it and remove it manually the remaining distance. After it has been removed, the force of the return spring arm **80** causes the lever element **64** to again rotate back to the position shown in the left storage column compartment **43**. It is notable that, in the event that the stop post **84** becomes broken, the interaction of the strengthening beam **88** in the area of the clearance angling **90** with the edge of the left divider wall **46** will provide an alternative limiting of the degree of rotation of the lever element **64**. Both forms of limiting the rotation are desirable for the dual purposes of causing the jewel box **11** to be ejected only to a desired distance and further to prevent undue strain upon the torsion post **62**.

As can be seen from the above, the storage device **10** of the present invention is extremely suitably adapted for use by owners of compact disk containers (jewel boxes) or any other rectangular solid object. It provides extremely secure and convenient access to the contents, contains a convenient number of objects and provides exterior visual access. Hence, it is expected that the invention will acheive extreme desirability in the marketplace.

In light of all of the above stated objects and advantages of the invention, it is projected that devices manufactured according to the invention will have extremely widespread industrial utility and commercial viability.

## Claims

1. A storage device for storing a plurality of discrete objects, comprising a hollow exterior frame member (12), an interior frame member (28) dividing the interior of the device into a plurality of slots (50) for receiving the objects, each of said slots being accessible from an open side; and securing/release means (60) associated with each of said slots to secure one of the objects therein and, upon manipulation, to release and eject the object therefrom such that the ejected object is manually accessible from the exterior of the device, wherein the exterior frame member has one open side and that the securing/release means comprises; a lever portion (64) free to rotate in one dimension about a fulcrum/pivot (62), said fulcrum/pivot being fixed with respect to the compartment and being situated between the front part and rear part of said lever; a securing surface portion (72) attached to the end of the lever corresponding to the front of the compartment, the securing surface being adapted to overlap a portion of the front surface of the object when the object is installed in the compartment; urging means (80) to continually urge the securing surface portion to a position of maximal overlap of the object; and release means (68,70), accessible to a user, being adapted such that pressure upon the release means overcomes the urging force of the urging means and causes the lever portion to rotate about said fulcrum/pivot to a position wherein the securing surface does not overlap the front of the object; characterised in that a triangular wedge portion (78) is attached to the end of the lever portion corresponding to the rear of the compartment and is adapted to abut against a rear corner of the object when the object is installed within the compartment, such that pressure upon the release means forces the wedge portion against the rear corner of the object so as to partially forcibly eject the object from the compartment.

2. A device according to Claim 1 wherein said slots are arranged in two or more vertical columns; and the securing/release mechanisms for each of said slots within each column are integrally connected to each other securing/release mechanism within said column.

3. A device according to Claim 1 or Claim 2 wherein the urging means include a spring arm (80) attached to the lever portion, said spring arm being of the expansion type and being buttressed (84) against a buttress element, said buttress element being stationary with respect to the compartment.

4. A device according to any preceding claim wherein the release means includes a button (68) formed adjacent the securing surface portion, said button including friction ridges (70) to facilitate non-slipping pressure being applied to said button.

5. A device according to any preceding Claim wherein the force of pushing one of the objects into an empty compartment operates the release means without further user contact therewith.

6. A Storage Device as claimed in any preceding claim, adapted to store compact disc containers, one container being receivable in each of said slots.

## Patentansprüche

1. Vorrichtung zum Aufbewahren einer Vielzahl einzelner Gegenstände, mit einem hohlen äußeren Rahmenelement (12), mit einem inneren Rahmenelement (28), das das Innere der Vorrichtung in eine Vielzahl von Schlitze (50) zur Aufnahme der Gegenstände unterteilt, wobei jeder der Schlitze von einer offenen Seite her zugänglich ist, und mit einer Arretier/Freigabe-Einrichtung (60), die jedem der Schlitze (50) zugeorndet ist und durch die jeweils einer der Gegenstände darin arretiert und bei entsprechender Betätigung freigegeben und derart ausgeworfen wird, daß der ausgeworfene Gegenstand von außerhalb der Einrichtung von Hand zugänglich ist, wobei das äußere Rahmenelement (12) eine offene Seite aufweist und die Arretier-/Freigabe-Einrichtung (60) folgendes besitzt: einen Hebelteil (64), der in einer Ebene um einen Drehpunkt/Drehachse (62) frei rotieren kann, wobei der Drehpunkt/Drehachse (62) gegenüber dem Fach fest ist und sich zwischen dem vorderen Teil und dem hinteren Teil des Hebels befindet, einen Arretierflächenbereich (72), der am der Vorderseite des Fachs entsprechenden Ende des Hebels vorgesehen ist, wobei die Arretierfläche einen Bereich der Frontfläche des Gegenstandes überdeckt, wenn dieser in das Fach eingelegt ist, eine Antriebseinrichtung (80), die den Arretierflächenbereich beständig in eine Stellung drängt, in der er den Gegenstand maximal überdeckt, und eine Freigabeeinrichtung (68,70), die für den Benutzer zugänglich und derart ausgebildet ist, daß Druck auf die Auslöseeinrichtung die Antriebskraft überwindet und bewirkt, daß der Hebelteil (64) um den Drehpunkt/Drehachse (62) in eine Stellung gedreht wird, in der die Arretierfläche die Frontfläche des Gegenstandes nicht mehr überdeckt; **dadurch gekennzeichnet, daß** ein dreieckiges keilförmiges Teil (78) am der hinteren Seite des Fachs entsprechenden Ende des Hebelteils angebracht und derart ausgebildet ist, daß er dann, wenn der Gegenstand in das Fach eingelegt ist, an einer hinteren Kante des Gegenstandes derart anliegt, daß ein Druck auf die Freigabeeinrichtung den keilförmigen Teil gegen die hintere Kante des Gegenstandes druckt und dadurch den Gegenstand aus dem Fach teilweise auswirft.

2. Vorrichtung nach Anspruch 1, dadurch gekennzeichnet, daß die Schlitze in zwei oder mehr vertikalen Spalten angeordnet sind und daß die Arretier/Freigabe-Einrichtung (60) für jeden der Schlitze (50) in jeder Spalte mit jeder der anderen Arretier/Freigabe-Einrichtungen in der Spalte integriert verbunden ist.

3. Vorrichtung nach Anspruch 1 oder 2, dadurch gekennzeichnet, daß die Antriebseinrichtung einen Federarm (80) aufweist, der am Hebelteil angebracht ist, und daß der Federarm (80) eine Expansionsfeder ist und sich an einem Stützelement (84) abstützt, wobei das Stützelement gegenüber dem Fach stationär ist.

4. Vorrichtung nach einem der vorhergehenden Ansprüche, dadurch gekennzeichnet, daß die Freigabeeinrichtung einen Knopf (68) aufweist, der angrenzend an den Arretierflächenbereich angebracht ist, und daß der Knopf Reibungserhebungen (70) aufweist, damit, ohne abzurutschen, Druck auf den Knopf ausgeübt werden kann.

5. Vorrichtung nach einem der vorhergehenden Ansprüche, dadurch gekennzeichnet, daß die Kraft, die einen der Gegenstände in ein leeres Fach schiebt, die Freigabeeinrichtung ohne deren weitere Berührung durch den Benutzer betätigt.

6. Vorrichtung nach einem der vorhergehenden Ansprüche, dadurch gekennzeichnet, daß in ihr Compact Disk-Hüllen aufbewahrbar sind, wobei jeweils eine Hülle in jedem der Schlitze aufgenommen ist.

## Revendications

1. Dispositif de stockage utilisé pour stocker une pluralité d'objets séparés, comprenant un élément formant cadre extérieur creux (12), un élément formant cadre intérieur (28) divisant l'intérieur dudit dispositif en une pluralité de rainures (50) pour recevoir lesdits objets, chacune desdites rainures étant accessible par un côté ouvert; ledit dispositif comprenant en outre un moyen de blocage et de déblocage (60) associé à chacune desdites rainures pour bloquer un desdits objets séparés dans chacune desdites rainures, et, en manoeuvrant ledit moyen de blocage et de déblocage, pour débloquer et éjecter ledit objet séparé contenu dans chacune desdistes rainures, de façon à ce que ledit objet éjecté soit accessible manuellement de l'extérieur dudit dispositif, dispositif dans lequel l'élément formant cadre extérieur comporte un côté ouvert, et ledit moyen de blocage et de déblocage comprend : une partie levier (64) qui peut tourner librement dans une seul plan autour d'un pivot servant de point d'appui (62), ledit pivot servant de point d'appui étant fixé par rapport audit compartiment et étant situé entre la partie avant et la partie arrière dudit levier; une partie servant de surface de blocage (72) fixée à l'extrémité dudit levier qui correspond à la partie avant du compartiment, la surface de blocage étant adaptée pour pouvoir recouvrir une partie de la face avant dudit objet lorsque celui-ci est installé dans ledit compartiment ; un moyen de sollicitation (80) qui oblige de manière continue la partie servant de surface de blocage à occuper une position de chevauchement maximal dudit objet séparé; et un moyen de déblocage (68,70), accessible à l'utilisateur, et agencé de façon à ce qu'une pression sur le moyen de déblocage surmonte la force dudit moyen de sollicitation et oblige la partie levier à tourner autour dudit pivot servant de point d'appui vers une position dans laquelle la surface de blocage ne recouvre pas la partie avant dudit objet; ledit dispositif se caractérisant par le fait qu'une portion triangulaire en forme de coin (78) est fixée à l'extrémité de la partie levier qui correspond à l'arrière du compartiment, et ladite portion est agencée de façon à venir buter contre un coin arrière de l'objet lorsque ledit objet est installé à l'intérieur du compartiment, de sorte que la pression sur le moyen de déblocage force la partie en forme de coin à s'appliquer contre ledit coin arrière dudit objet, ce qui oblige ledit objet à s'éjecter partiellement dudit compartiment.

2. Dispositif selon la revendication 1 dans lequel les rainures sont agencées en deux ou plusieurs colonnes verticales ; et les moyens de blocage et de déblocage pour chacune desdites rainures le long de chaque colonne sont intégralement connectés les uns aux autres le long de ladite colonne.

3. Dispositif selon la revendication 1 ou la revendication 2, dans lequel le moyen de sollicitation comporte un bras-ressort (80) fixé à la partie levier, ledit bras-ressort étant du type à expansion et venant buter en un point (84) contre un élément de butée, ledit élément de butée étant fixe par rapport au compartiment.

4. Dispositif selon l'une quelconque des revendications précédentes, dans lequel le moyen de déblocage comporte un bouton (68) formé au voisinage de la portion formant surface de blocage, ledit bouton comportant des stries (70) pour faciliter l'application d'une pression sur ledit bouton sans glissement.

5. Dispositif selon l'une quelconque des revendications précédentes, dans lequel la force d'application de chacun desdits objets dans chaque compartiment vide actionne le moyen de déblocage sans autre contact avec ledit moyen de la part de l'utilisateur.

6. Dispositif de stockage selon l'une quelconque des revendications précédentes, adapté pour pouvoir stocker des conteneurs de disques compacts, chaque rainure pouvant recevoir un conteneur de disques compacts.
